# EUROPEAN PATENT APPLICATION

(11) **EP 1 361 529 A1**
(43) Date of publication of application: **12.11.2003**
(21) Application number: 02712393.4
(22) Date of filing: 15.02.2002
(51) Int. Cl.: G06F 17/60

(54) **METHOD AND DEVICE FOR HANDLING COST APPORTIONMENT**

(30) Priority: 15.02.2001 JP 2001039030
(71) Applicant: NTT DoCoMo, Inc., Tokyo 100-6150 (JP)
(72) Inventor: NISHIKAWA, Seiji, Saitama-shi, Saitama 331-0063 (JP); KINOSHITA, Satoru, Kodaira-shi, Tokyo 187-0002 (JP); SAIGA, Yoshinori, Kawaguchi-shi, Saitama 332-0011 (JP); KIMURA, Shigeki, Nagoya-shi, Aichi 465-0036 (JP)
(74) Representative: HOFFMANN - EITLE
(86) International application number: JP0201309
(87) International publication number: WO02065363

(57) **Abstract**

Accounting data input into PC 20 are stored at first in Before-allocation Accounting Data Storage Unit 15a. Then an allocation processing is implemented on the basis of Allocation Table 15b and the accounting data are stored in After-allocation Accounting Data Storage Unit 15c. In Allocation Table 15b various allocation patterns have been stored beforehand and the most appropriate allocation pattern is chosen in accordance with the input accounting data.

## Description

### Technical Field

The present invention relates to method and device to allocate a cost common to each business section.

### Background Art

There is a method proposed in the business accounting to allocate a generated cost to each business section and to manage the allocated cost by each business section.

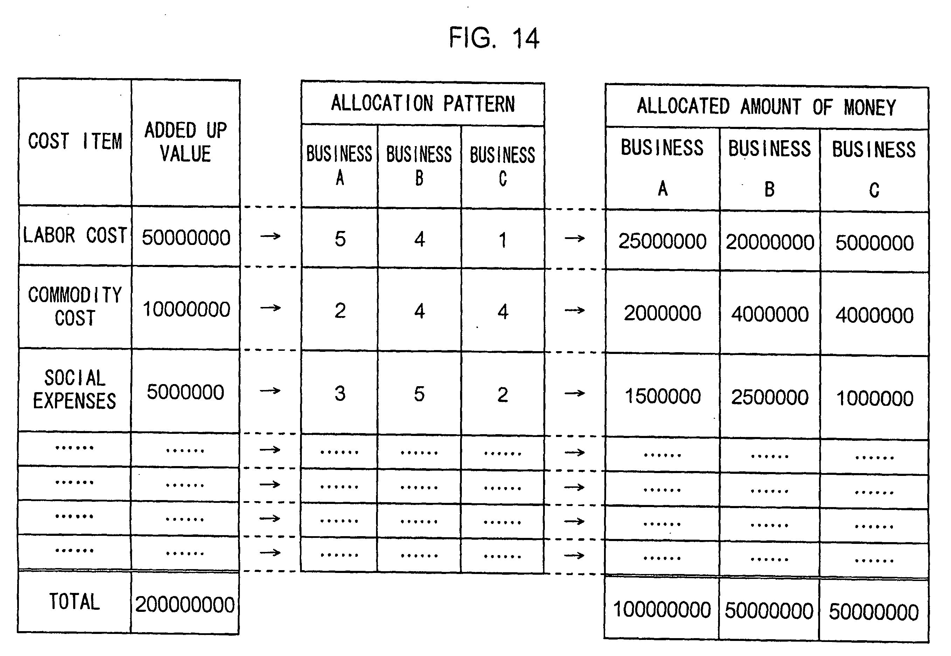

Fig.14 is a pattern diagram for this kind of cost allocation method.

In Fig.14, for example, an annual labor cost of Japanese Yen 50,000,000 will be allocated in accordance with a predetermined pattern (for example, business A : business B : business C = 5:4:1) to business A Japanese Yen 25,000,000, to business B Japanese Yen 20,000,000 and to business C Japanese Yen 5,000,000.

In this way, cost management in each business area is realized by allocating a cost to each business on the basis of a predetermined allocation pattern.

However, the above conventional method of the cost allocation is used for a total cost incurred during a certain period, such as the annual labor cost of Japanese Yen 50,000,000. Therefore it is difficult to cope with a user request promptly, such as a request to modify a specific cost amount included in the total labor cost, or a request to change an allocation pattern for a specific kind of cost included in the total labor cost.

### DISCLOSURE OF INVENTION

Considering the above background, the present invention has an object to provide a more flexible cost allocation mechanism to cope with a user request. To achieve this object, the present invention provides the user with a cost allocation method comprising: an allocation step for a cost generated relating to plural business areas, the allocation step including steps of choosing an allocation pattern among plural allocation patterns on the basis of a predetermined allocation standard for the cost, and of allocating the identified cost to each business areaon the basis of the chosen pattern; and an adding up step of adding up the allocated cost amount in each business area. According to the present invention, the allocation pattern is chosen in accordance with the predetermined allocation standard for the cost. The cost allocation is performed on the basis of the chosen allocation pattern, and the adding up is performed in each business section or in each business area. Therefore a more flexible allocation processing is realized.

In a preferred form of the present invention, an accounting server acquires accounting data for a cost from plural terminals through a network and performs the above cost allocation processing using the accounting data. This invention can be implemented in a mode of production & sales of such an accounting server. In addition, this invention can be implemented in a mode of user distribution of a computer program, which causes such an accounting server to perform the above allocation processing through a telecommunication line, or in a mode of user distribution of a computer-readable storage medium storing such a computer program.

### BRIEF DESCRIPTION OF THE DRAWINGS

Fig.1 is a block diagram showing a total configuration for a cost allocation system in an embodiment of the present invention.
Fig.2 is a block diagram showing a configuration of a personal computer composing the system in the embodiment;
Fig.3 is a block diagram showing a configuration of an accounting server composing the system in the embodiment.
Fig.4 is a diagram showing an interrelation among Before-allocation Accounting Data Storage Unit, Allocation Table and After-allocation Accounting Data Storage Unit.
Fig.5 is a format diagram showing an example of memory contents in Before-allocation Accounting Details Storage Unit in the embodiment.
Fig.6 is a format diagram showing an example of memory contents of Before-allocation Daily Summary Storage Unit in the embodiment.
Fig.7 is a format diagram showing an example of memory contents of Before-allocation Monthly Summary Storage Unit in the embodiment.
Fig.8, 9 and 10 are format diagrams showing examples of Allocation Table in the embodiment.
Fig.11 is a format diagram showing an example of memory contents of After-allocation Accounting Details Storage Unit in the embodiment.
Fig.12 and 13 are format diagrams showing examples of memory contents of After-allocation Daily summary Storage Unit and After-allocation Monthly Summary Storage Unit in the embodiment.
Fig.14 is a pattern diagram showing a conventional cost allocation method.

### BEST MODE OF CARRYING OUT THE INVENTION

Embodiments of the present invention will be described hereinafter, referring to drawings. The scope of the invention is not restricted within the embodiments, and the invention can provide variations apart from the embodiments, without departing from the basic concept of the invention.

### A: Configuration

### (1) Configuration of total system

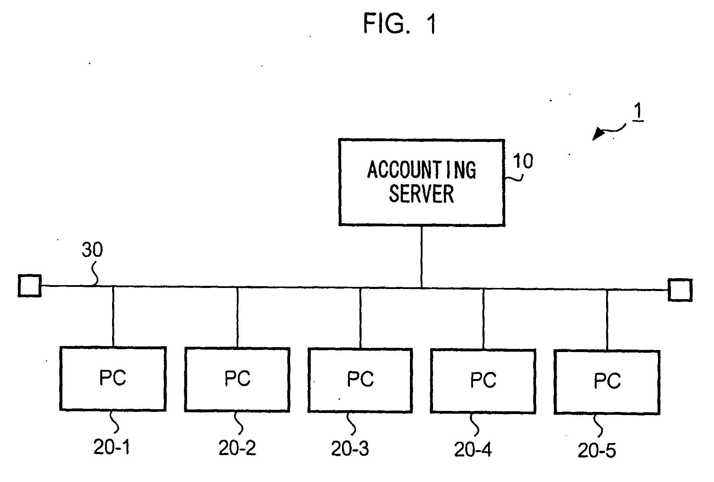

Fig.1 is a block diagram showing a cost allocation system in an embodiment of the present invention.

As shown in Fig.1, the cost allocation system comprises following elements: personal computers (hereinafter abbreviated as PC) PC 20-1 to 20-5 by which operators input and output accounting data, Accounting Server 10 for accumulating and adding up accounting data, Communication Line 30 for interconnecting the above elements. And these elements comprise a local area network in a business enterprise.

PC 20-1 to 20-5 are generically called hereinafter PC 20, since they all have the same configuration.

### (2) Configuration of PC 20

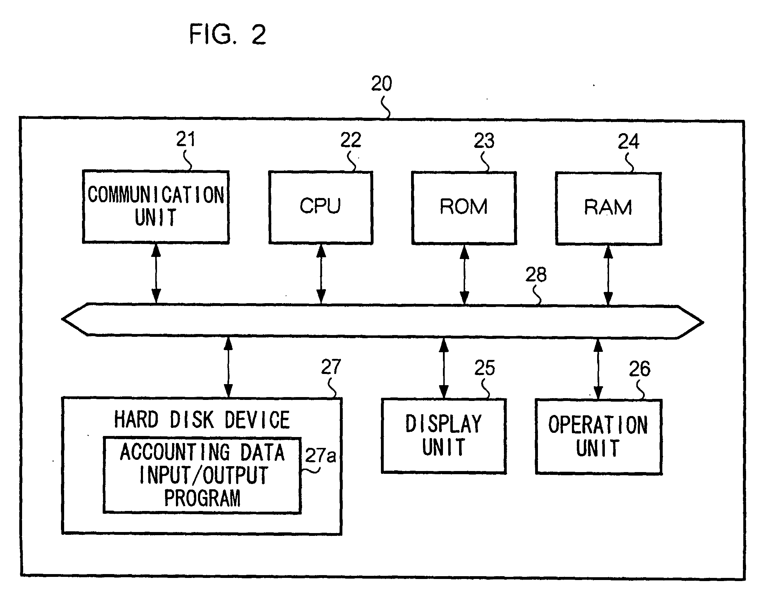

Next, the configuration of PC 20 will be illustrated referring to a block diagram of Fig.2. As shown in Fig.2, PC 20 comprises Communication Unit 21, CPU (Central Processing Unit) 22, ROM (Read Only Memory) 23, RAM (Random Access Memory) 24, Display Unit 25, Operation Unit 26, Hard Disk Device 27, and Bus 28 interconnecting the foregoing elements.

Communication Unit 21 comprises a communication control unit and a connecting interface with Communication Line 30 and Communication Unit 21 performs data communication with Accounting Server 10 through Communication Line 30.

ROM 23 is a read-only program memory, and CPU 22 controls the whole PC 20 by executing a control program read out from ROM 23. Then RAM 24 is used for a work area of CPU 22.

Hard Disc Device 27 stores various kinds of application programs installed into PC 20. These application programs contain, for example, Accounting Input & Output program 27a, which receives various accounting data from outside and which outputs various accounting data accumulated in the system.

Display Unit 25 is, for example, CRT (Cathode-Ray Tube) Display or Liquid Crystal Display. Display Unit 25 displays dedicated GUI (Graphic User Interface), executing above Accounting Input & Output program 27a by CPU 22.

Operation Unit 26 comprises a keyboard and a mouse, which are not drawn in the Figures. Operation Unit 26 receives user's operation and supplies a signal through Bus 28 to CPU 22, corresponding to user's operation.

### (3) Configuration of Accounting Server 10

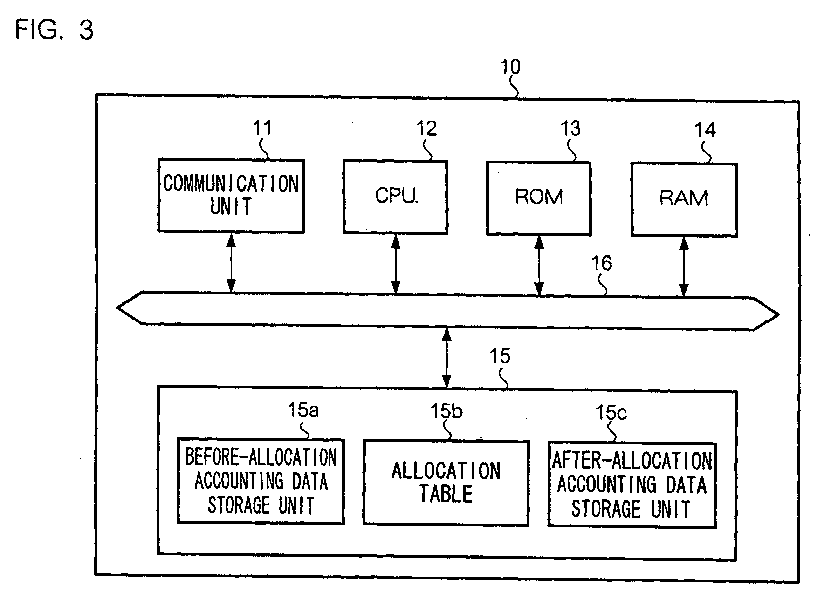

Next, the configuration of Accounting Server 10 will be illustrated, referring to a block diagram of Fig.3. As shown in Fig.3, Accounting Server 10 comprises Communication Unit 11, CPU 12, ROM 13, RAM 14, Hard Disc Device 15 and interconnecting Bus 16.

Communication Unit 11 comprises a communication control circuit and a connection interface with Communication Line 30 and performs data communication with PC 20 through Communication Line 30.

ROM 13 is a read-only program memory, and CPU 12 controls whole Accounting Server 10 by executing a control program read out from ROM 13. Then RAM 14 is used for a work area of CPU 12.

Hard Disc Device 15 has 3 storage areas named as Before-allocation Accounting Data Storage Unit 15a, Allocation Table 15b and After-allocation Accounting Data Storage Unit 15c.

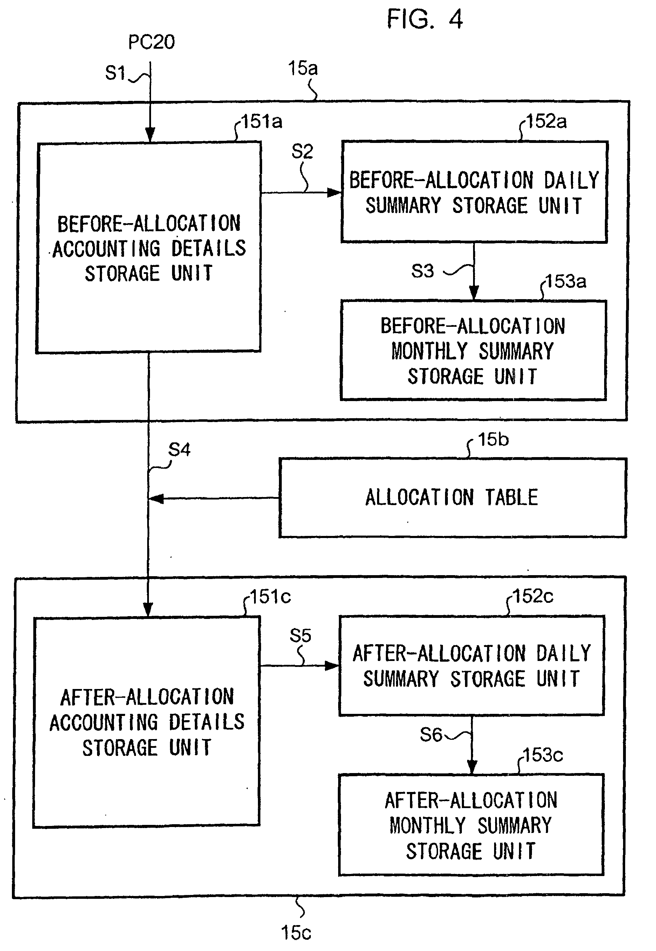

Fig. 4 is a diagram for a detailed explanation for the interrelation among Before-allocation Accounting Data Storage Unit 15a, Allocation Table 15b, and After-allocation Accounting Data Storage Unit 15c.

In Fig. 4, accounting data transmitted from PC 20 to Accounting Server 10 are stored in Before-allocation Data Storage Unit 15a and are subjected to allocation processing using Allocation Table 15b. Then after-allocation accounting data obtained through the allocation processing are stored in After-allocation Accounting Data Storage Unit 15c.

In detailed description, Before-allocation Accounting Data Storage Unit 15a comprises Before-allocation Accounting Details Storage Unit 151a, Before-allocation Daily Summary Storage Unit 152a and Before-allocation Monthly Summary Storage Unit 153a. The memory contents of Before-allocation Daily Summary Storage Unit 152a will be renewed on the basis of the memory contents of Before-allocation Accounting Details Storage Unit 151a, and the memory contents of Before-allocation Monthly Summary Storage Unit 153a are renewed on the basis of the memory contents of Before-allocation Daily Summary Storage Unit 152a.

Likewise, After-allocation Accounting Data Storage Unit 15c comprises After-allocation Accounting Details Storage Unit 151c, After-allocation Daily Summary Storage Unit 152c and After-allocation Monthly Summary Storage Unit 153c. The memory contents of After-allocation Daily Summary Storage Unit 152c will be renewed on the basis of the memory contents of After-allocation Accounting Details Storage Unit 151c, and the memory contents of After-allocation Monthly Summary Storage Unit 153c is renewed on the basis of the memory contents of After-allocation Daily Summary Storage Unit 152c.

### (4) Configuration of each storage unit

Next, a configuration of each above storage unit will be illustrated.

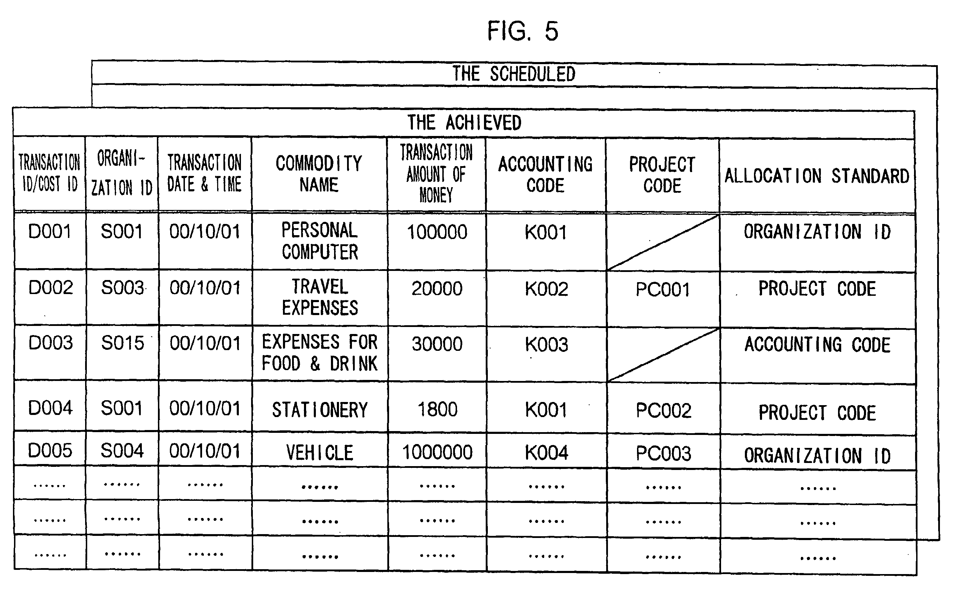

Fig.5 is a format table showing an example of accounting data stored in Before-allocation Accounting Details Storage Unit 151a.

There are data of scheduled value and data of achieved value in the accounting data stored in Before-allocation Accounting Details Storage Unit 151a. Namely, an operator inputs scheduled accounting data for scheduled transactions by operating PC 20, while the operator inputs achieved accounting data for achieved transactions. And these two kinds of accounting data are stored in Before-allocation Accounting Details Storage Unit 151a. A business enterprise can compare the scheduled accounting data and the achieved accounting data stored in this way to grasp the performance of the business enterprise.

Shown in Fig.5, a piece of accounting data contains items such as transaction ID / cost ID, organization ID, function code, transaction date & time, commodity name, transaction money amount, accounting code, project code and designation information of allocation standards.

"Transaction ID / cost ID" means either transaction ID or cost ID. Transaction ID is an ID granted to each before-allocation transaction under the control of Accounting Server 20. Since each piece of the accounting data contains transaction ID, any piece of the accounting data can be identified as the data relating to a certain transaction. By utilizing transaction ID, Drill-down Search and Allocation Adjustment are carried out as mentioned below. Note that transition ID is replaced with cost ID after the allocation of accounting data. Therefore there is a title of "TRANSACTION ID / COST ID" in a column of the accounting data.

"Cost ID" is an ID for managing after-allocation accounting data. Plural cost IDs are granted if the same transaction contains plural items. Therefore, it is possible that "transaction ID / cost ID" contains plural cost IDs in a piece of accounting data. Note that the allocation is also performed for a scheduled payment by this system, however, cost ID is not granted to a scheduled value. Cost ID is only granted to an achieved value. Therefore only achieved accounting data can contain cost ID in "TRANSACTION ID / COST ID".

"Organization ID" means identity information granted to each organization. Organization means here an activity unit of a business enterprise, such as Sales Planning Department, General Affairs Department, System Department and so on.

"Function Code" means a code to identify a function of each organization. Although organization is an activity unit of a business enterprise as mentioned above, organization does not always have only one function. Each organization has here one or more functions. For example, Agency Management Department has sales function, maintenance function and so forth.

"Transaction Date & Time" shows a date on which accounting data is generated. Transaction Date & Time, together with Organization ID, shows when and in which organization the accounting data is generated.

"Commodity Name" is an item name for purchase or payment. And "Transaction Amount" is a money amount for purchase or payment.

"Accounting Code" is a code corresponding to an accounting item on financial statements with one-to-one relation. And "Accounting Code" differs in accordance with an expense purpose. Accounting Server 10 is equipped with a code table on which accounting codes are described (drawing omitted). Accounting Server 10 refers to the code table on the basis of the input commodity name and the input transaction amount. Then Accounting Server 10 determines the corresponding accounting code.

Next, "project" means business operations carried out by one or more organizations to achieve a certain purpose. And "Project Code" is a code to identify the project.

"Allocation Standard" is information to single out a code, by which the cost allocation should be implemented, from above organization code, accounting code and project code. In this embodiment, Accounting Server 10 chooses an allocation processing among plural allocation processing types and executes the allocation processing for the accounting data. The choice of the allocation processing types depends on the "allocation standard" contained in the concerned accounting data. This "allocation standard" can be also designated by CPU 12 or by an operator of PC 20 through an input operation. Note that there are two types of standards concerning an organization. One is a standard of organization ID itself and the other is a standard of organization functions, as mentioned below.

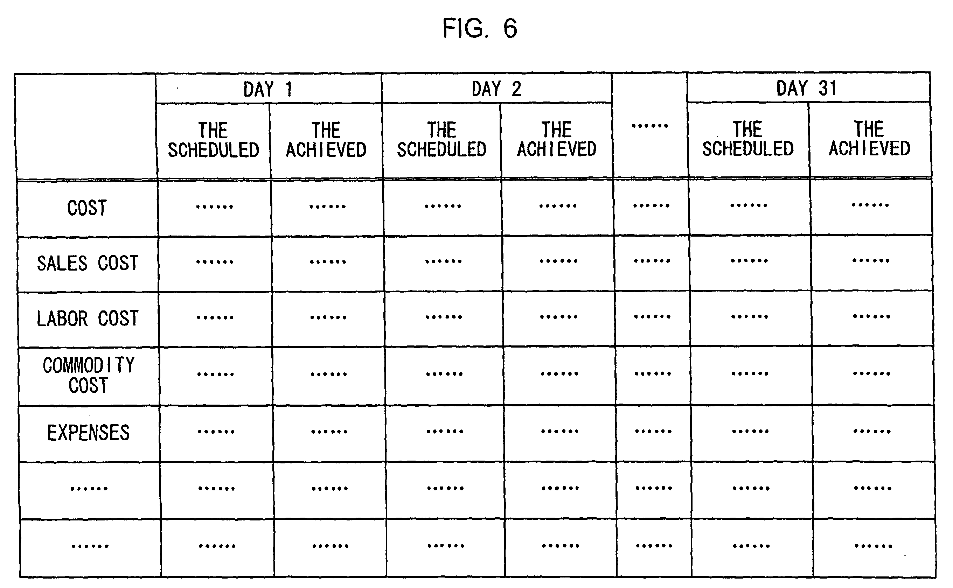

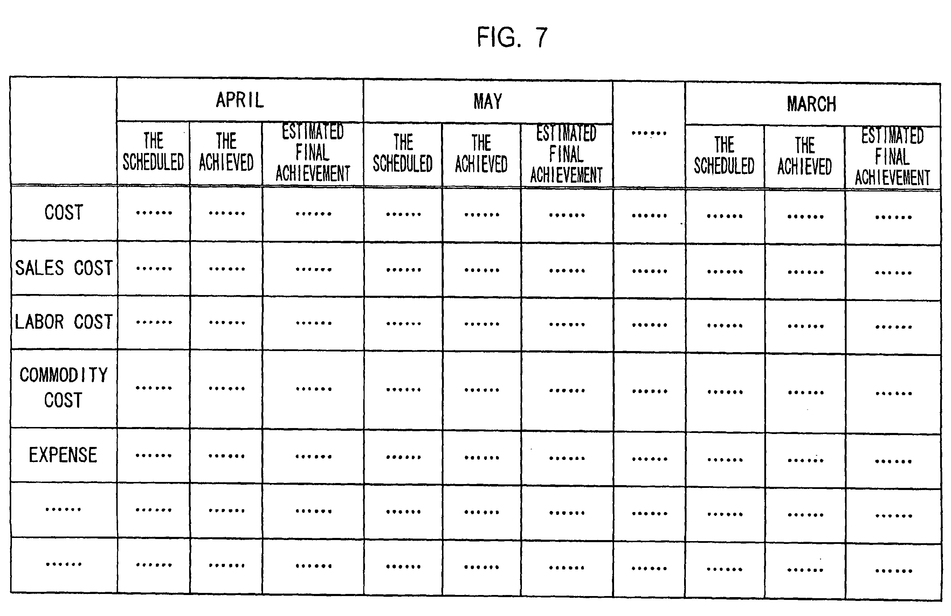

Next, configurations of Before-allocation Daily Summary Storage Unit 152a and Before-allocation Monthly Summary Storage Unit 153a will be illustrated, referring to format diagrams of Fig.6 and Fig.7.

Before-allocation Daily Summary Storage Unit 152a stores accounting data in one-day unit. Namely, Before-allocation Daily Summary Storage Unit 152a stores scheduled and achieved accounting data, classified by accounting items, from memory contents of Before-allocation Accounting Details Storage Unit 151a, as shown in Fig.6.

In addition, Before-allocation Monthly Summary Storage Unit 153a stores monthly accounting data. Namely, Before-allocation Monthly Summary Storage Unit 153a stores scheduled and achieved accounting data, classified by accounting items, from memory contents of Before-allocation Accounting Daily Storage Unit 152a, as shown in Fig.7. Moreover, Before-allocation Monthly Summary Storage Unit 153a also stores estimated final achievements for each month. The estimated final achievement means the total expenses of the concerned month at the end of the month, estimated by the scheduled data and the achieved data.

Next, a configuration of Allocation Table 15b will be illustrated.

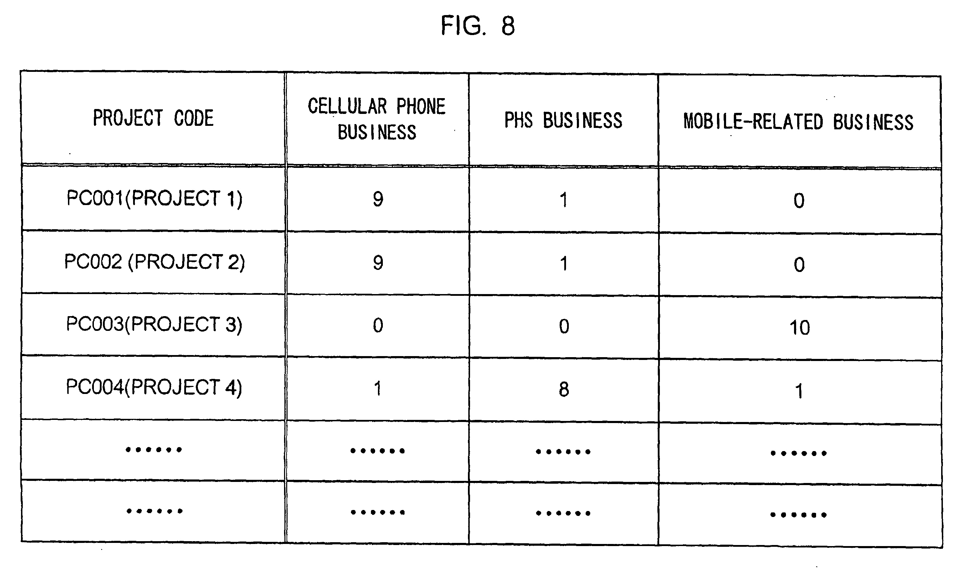

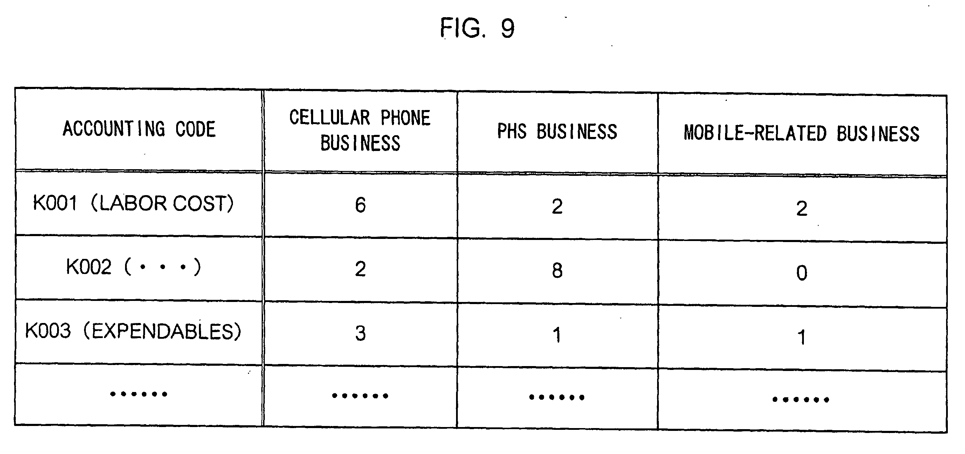

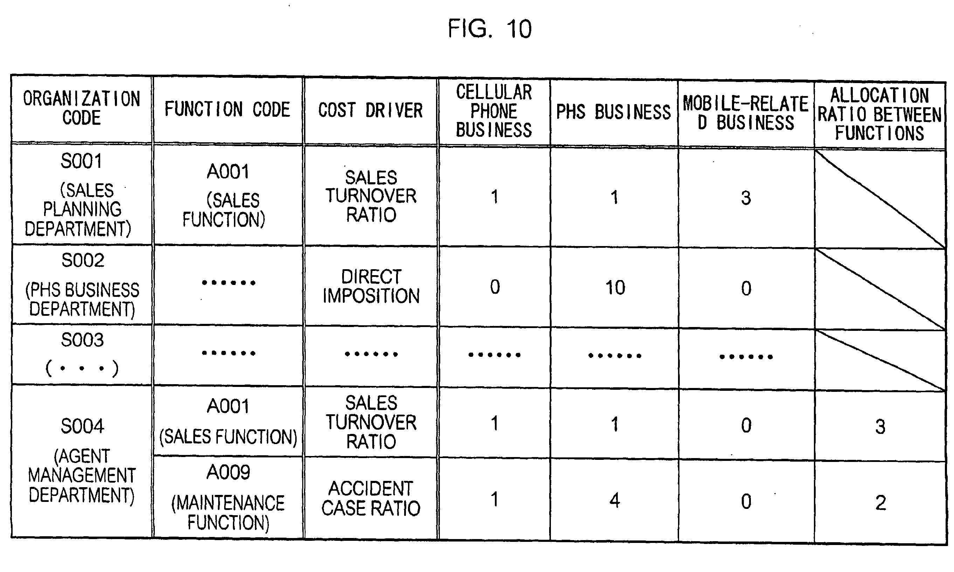

Allocation Table 15b comprises a project allocation table shown in Fig.8, an accounting allocation table shown in Fig.9 and an organization allocation table shown in Fig. 10.

The generated cost is allocated by a business classification on the basis of an allocation pattern described in one of the above tables, i.e., project allocation table, or accounting allocation table, or organization allocation table. The business classification is a rough classification of a whole business, which is performed by a whole organization of the business enterprise, in accordance with business types. The business is classified here into three types. They are Cellular phone business, PHS (Trademark: Personal Handyphone System) business and Mobile-related business, on the assumption that the business enterprise runs a telecommunication business with an introduction of this system.

The project allocation table in Fig.8 stores allocation patterns to each business, corresponding to each project.

For example, when a cost is generated in project 1 with project code "PC001", then 90 % of said cost is allocated to Cellular phone business, 10 % to PHS business and 0 % to Mobile-related business. Namely, this means that project 1 with project code "PC001" is 90 % related to Cellular phone business, 10 % related to PHS business and not related to Mobile-related business.

Note that an operator of PC 20 inputs in which project the cost is generated.

The accounting allocation table in Fig.9 stores a corresponding business allocation pattern of each accounting code.

Exemplifying expendable supplies with accounting code "K003", 60 % of the cost is allocated to Cellular phone business, 20 % of the cost to PHS business and 20 % of the cost to mobile-related business.

The organization allocation table in Fig.10 stores a corresponding business allocation pattern of each organization function.

Exemplifying Sales Planning Department with organization ID "S001", it is assumed here that Sales Planning Department has a sales function which is mainly for sales.

As shown in Fig.10, sales function costs of Sales Planning Department are allocated in the ratio of 20 % to Cellular phone business, 20 % to PHS business and 60 % to Mobile-related business. Namely, each organization function does not correspond to each business area in one-to-one relation, but the allocation rate is determined in accordance with relation strength between each function and each business.

The allocation pattern here is, determined by the cost driver shown in Fig.10, Cellular phone business : PHS business : Mobile-related business =1 : 1 : 3 =20 % : 20 % : 60 %. The cost driver here is "sales turnover ratio". This means that the allocation pattern is determined by the sales turnover ratio relating to each business in this case. Namely, sales turnover ratio of the commodities sold by Sales Planning Department is 1 : 1 : 3 among Cellular phone, PHS and Mobile-related.

Every time commodity's sales turnover is input into the system, sales turnover ratio is added up in a database (not shown) and can be grasped by database reference.

In another case, all the costs that are generated in a specific organization can be allocated to a specific business without a cost driver. "DIRECT IMPOSITION" in Fig.10 means this case. For example, "S002" organization ID indicates that all the costs generated in PHS Department should be allocated to "PHS business".

As stated above, an allocation pattern is determined by multiple standard types such as project corresponding to each cost, expense purpose of each cost, organization or organization function corresponding to cost and so on. Therefore, an advanced appropriate allocation is realized for various kinds of costs. And an advanced precise business judgment is expected by referring to allocated costs.

In addition, the procedures of allocation pattern change are simple and easy, since it is only required to rewrite above allocation table 15b.

Next, a configuration of After-allocation Accounting Data Storage Unit 15c will be illustrated.

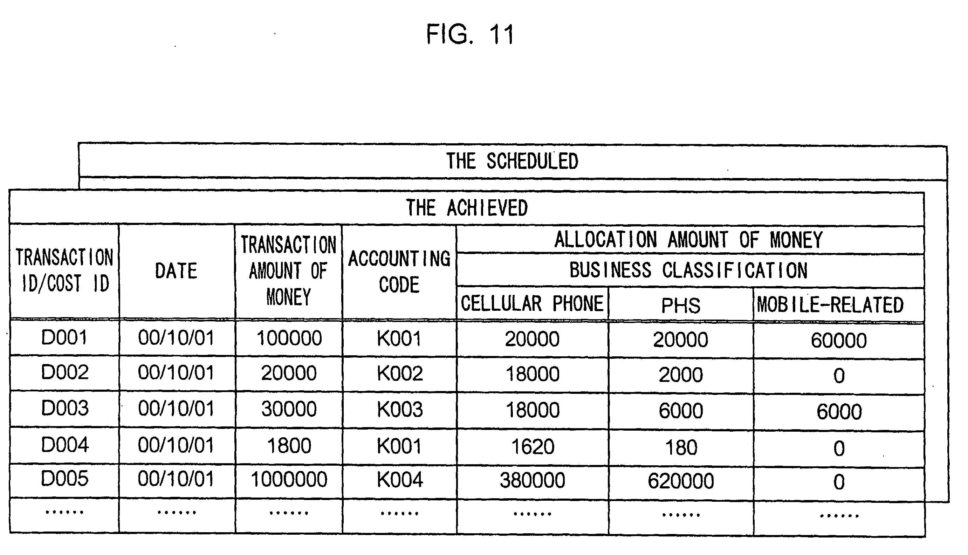

Fig.11 is a format diagram showing an example of memory contents of After-allocation Accounting Details Storage Unit 151c. As shown in Fig.11, each transaction amount corresponding to each transaction ID is allocated to business areas on the basis of the above allocation tables.

For example, transaction amount of "Japanese Yen 100,000", corresponding to transaction ID "D001", is allocated to business areas: "Japanese Yen 20,000" to Cellular phone business, "Japanese Yen 20,000" to PHS business and "Japanese Yen 60,000" to Mobile-related business.

There are two types of data, which are stored in After-allocation Accounting Details Storage Unit 151c: scheduled data and achieved data. This is the same as in before-allocation.

In addition, there are two sorts of accounting data of the scheduled & the achieved in after-allocation, since Before-allocation Accounting Details Storage Unit 151a has scheduled data and achieved data and the allocation is carried out separately on the basis of the scheduled data and the achieved data. Therefore there are two sorts of after-allocation accounting data of the scheduled and the achieved.

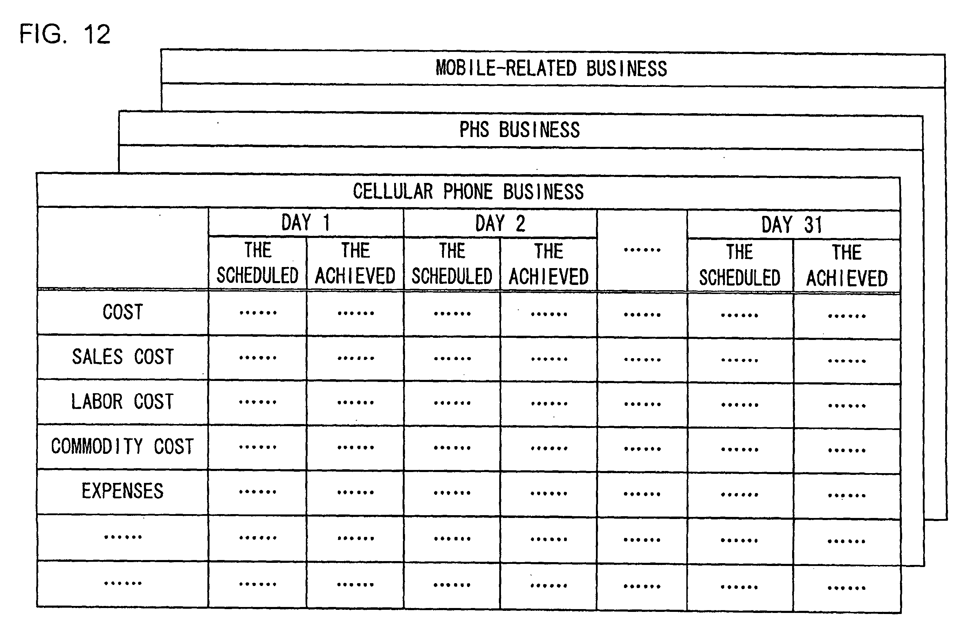

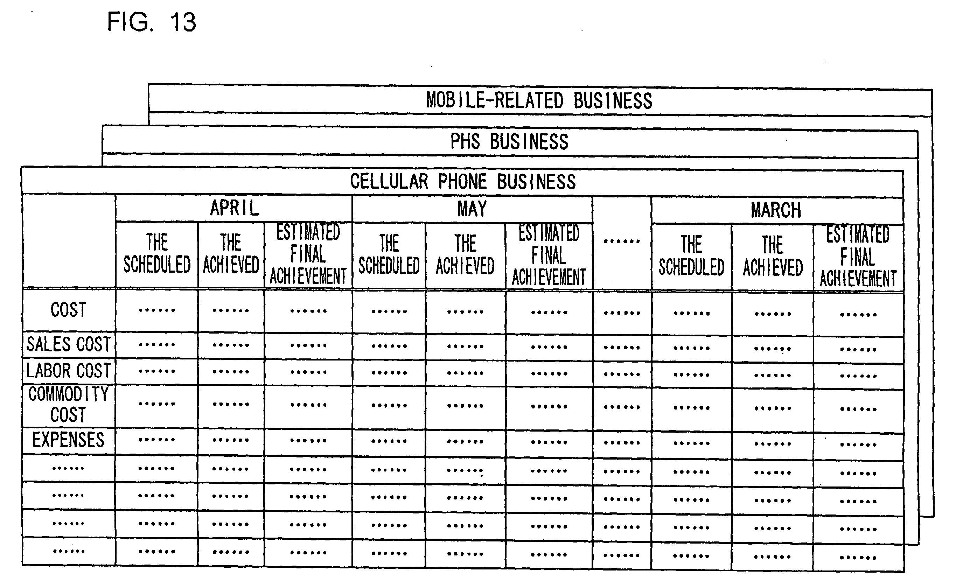

Next, configurations of After-allocation Daily Summary Storage Unit 152c and After-allocation Monthly Summary Storage Unit 153c will be illustrated, referring to Fig.12 and Fig.13.

After-allocation Daily Summary Storage Unit 152c stores accounting data in one-day unit for each allocation area. For example,

After-allocation Daily Summary Storage Unit 152c stores scheduled accounting data and achieved accounting data in one-day unit for Cellular phone business, PHS business and Mobile-related business, added up in each accounting item, as shown in Fig.12.

In addition, After-allocation Monthly Summary Storage Unit 153c stores accounting data in one-month unit for each allocation area. For example, After-allocation Monthly Summary Storage Unit 153c stores the scheduled value, the achieved value and the estimated final achievement in one-month unit, added up for each accounting item regarding Cellular phone business, PHS business and Mobile-related business, as shown in Fig.13.

### B: Operation

Next, operations in the embodiment with the above configuration will be explained in the following order: (1) allocation processing, (2) usage examples of accounting data processed for allocation.

### (1) Allocation processing

An example of a cost allocation processing will be illustrated hereinafter, referring to Fig.4-13.

At first an operator logs on to the system by carrying out input operations such as password input etc. on PC 20. The operator inputs accounting data such as transaction date & time, transaction amount in accordance with the description of contents of the transaction slip etc. (not shown). This example suppose a case that accounting data indicating that "a personal computer" is purchased at "Japanese Yen 100,000" "on October 1^{st}, 2000" is input.

Accounting Server 10 distinguishes the logged on PC 20. And Accounting Server 10 recognizes an organization ID of the operator, who inputs the accounting data, by the concerned PC. This operational example is on an assumption that the organization ID "S001" is recognized, when a member of an organization with organization ID "S001" inputs data. Accounting Server 10 issues transaction ID "D001", when accounting data of each accounting item are input. And Accounting Server 10 generates accounting data, containing organization ID, transaction ID and input items, to store the data in Before-allocation Accounting Details Storage Unit 151a.

Furthermore, the operator can directly input an allocation pattern itself, which should be used. In this case, when the operator inputs the pattern into PC 20, PC 20 accepts the input operation and transmits the input allocation pattern to Accounting Server 10.

In this way of processing, each piece of accounting data is stored in correspondence with "D001" transaction ID, as shown in Fig.5. (Step S1 in Fig.4)

The above accounting data are added up in one-day unit and classified into each accounting item on the basis of a granted accounting code. The adding up processing in one-day unit is carried out separately for the scheduled and for the achieved, and the data are stored in Before-allocation Daily Summary Storage Unit 152a as shown in Fig.6.

### (Step S2 in Fig.4)

Furthermore, the data stored in Before-allocation Daily Summary Storage Unit 152a are added up in one-month unit and are classified into each accounting item on the basis of the granted accounting code. This adding up processing in one-month unit is performed separately for the scheduled and for the achieved. Then the estimated final achievement at the end of the month is calculated. As a result, Before-allocation Daily Summary Storage Unit 152a stores data shown in Fig.7. (Step S3 in Fig.4)

An allocation processing is implemented on "transaction amount" in each accounting data stored in Before-allocation Accounting Details Storage Unit 151a, using an allocation pattern (in reference to Fig.8-10) determined by an "allocation standard" in the accounting data. Then after-allocation accounting data obtained through the allocation processing are stored in After-allocation Accounting Details Storage Unit 151c.

This allocation processing will be explained below. In Fig.5, the "allocation standard" is an organization ID for the accounting data with transaction ID "D001".

When accounting data with organization ID of "allocation standard" are processed, Accounting Server 10 refers to an organization allocation table in Fig.10. As the concerned accounting data with transaction ID "D001" has an organization code "S001", Accounting Server 10 searches an allocation pattern corresponding to the organization code in the organization allocation table. In Fig.10 as shown at the top of the list, the example contains "S001" as an "organization code" and therefore the allocation pattern here is applied for accounting data with the "D001" transaction ID. The allocation pattern uses "sales turnover ratio" as a cost driver. The sales turnover ratio of Cellular phone business, PHS business and Mobile-related business is 1 : 1 : 3 in the example shown in Fig.10. Therefore, Accounting Server 10 allocates the transaction amount of "JAPANESE YEN 100,000" with transaction ID "D001" to Cellular phone business "Japanese Yen 20,000", to PHS business "Japanese Yen 20,000" and to Mobile-related business "Japanese Yen 60,000", as shown in Fig.11. (Step S4 in Fig.4)

Some organizations have plural functions. As for such organizations, generated cost can be allocated from an organization to a function and then from a function to a business. An allocation operation will be explained by accounting data with transaction ID "D005" in Fig.5 as an example. This accounting data has an organization ID as an "allocation standard". Accounting server 10 refers to an organization allocation table in Fig.10 to process accounting data with the organization ID as the "allocation standard".

Next, as the concerned accounting data with transaction ID "D005" has an organization code "S004", Accounting Server 10 searches an allocation pattern corresponding to the organization code in the organization allocation table. An example in Fig.10 contains "S004" organization code at the bottom of the list. Therefore, this allocation pattern is applied for the accounting data containing transaction ID "D005". This allocation pattern, however, contains 2 function codes, i.e., "A001" and "A009". In such a case, where an allocation pattern contains plural function codes, Accounting Server 10 refers to an allocation ratio between functions and allocates a cost to each function. For the example in Fig.10, the cost will be allocated at a ratio of 3 : 2 to each function with function code "A001" or "A009". Then the accounting server allocates Japanese Yen 1,000,000 for the purchase of a vehicle as an expense in the Agent Management Department to sales function Japanese Yen 600,000 corresponding to "A001" function code, and to maintenance function Japanese Yen 400,000 corresponding to "A009" function code. Then Accounting Server 10 refers to a cost driver defined in accordance with "A001" function code for the allocation pattern to re-allocate allocated Japanese Yen 600,000 of sales function to each business. The cost driver is sales turnover ratio as an example in Fig.10. And the sales turnover ratio is Cellular phone business : PHS business : Mobile-related business = 1 : 1 : 0. The reason why Mobile-related business takes the value of zero is that the Agent Management Department does not have Mobile-related business originally. Therefore Accounting Server 10 allocates to both Cellular phone business and PHS business Japanese Yen 300,000 apiece. Likewise, Accounting Server 10 refers to a cost driver defined in accordance with function code "A009" to re-allocate allocated Japanese Yen 400,000 of maintenance function to each business. The cost driver is accident case ratio. The accident case ratio is Cellular phone business : PHS business : Mobile-related business = 1 : 4 : 0. Therefore to Cellular phone business Japanese Yen 80,000 and to PHS business Japanese Yen 320,000. In total, the allocation is Japanese Yen 380,000 for Cellular phone business and Japanese Yen 620,000 for PHS business.

Next, accounting data with transaction ID "D002" in Fig.5 has a "project code" as an "allocation standard". Accounting Server 10 refers to a project allocation table in Fig.8, when Accounting Server 10 processes accounting data with "project code" of "allocation standard". Then Accounting Server 10 searches a corresponding allocation pattern in a project allocation table, since the accounting data with transaction ID "D002" has "project code PC001". In an example in Fig.8, an allocation pattern at the bottom of the list has "project code PC001". Therefore, Accounting Server 10 allocates a transaction amount of "Japanese Yen 20,000", which is included in accounting data with transaction ID "D002", to Cellular phone business "Japanese Yen 18,000", to PHS business "Japanese Yen 2,000" and to Mobile-related business "Japanese Yen 0".

### (Step S4 in Fig.4)

Next, accounting data with transaction ID "D003" has "accounting code" as an "allocation standard" in Fig.5. Accounting Server 10 refers to an accounting allocation table in Fig.9, when Accounting Server 10 processes accounting data with "accounting code" as an "allocation standard". Then Accounting Server 10 searches a corresponding allocation pattern in the accounting allocation table, since the accounting data with transaction ID "D003" has "accounting code K003". In an example in Fig.9, an allocation pattern in the third line from the top of the list has "accounting code K003". Then Accounting Server 10 allocates the transaction amount of "Japanese Yen 30,000" in accordance with this allocation pattern to Cellular phone business "Japanese Yen 18,000", to PHS business "Japanese Yen 6,000" and to Mobile-related business "Japanese Yen 6,000". (Step S4 in Fig.4)

Note that Accounting Server 10 stores accounting data in After-allocation Accounting Details Storage Unit 151c on the basis of allocation pattern transmitted from PC 20, when an operator inputs a wishful allocation pattern into PC 20.

These allocated accounting data are added up in one-day unit and classified into accounting items on the basis of granted accounting codes. This adding up processing in one-day unit is carried out separately for the scheduled value and for the achieved value. The data are stored in After-allocation Daily Summary Storage Unit 152c as shown in Fig.12.

### (Step S5 in Fig.4)

Furthermore, the data stored in After-allocation Daily Summary Storage Unit 152c are added up in one-month unit and classified into accounting items on the basis of granted accounting code. This adding up processing in one-month unit is carried out separately for the scheduled value and for the achieved value. Then the estimated month-end achievement is calculated and the data are stored in After-allocation Daily Summary Storage Unit 152c as shown in Fig.13. (Step S6 in Fig.4)

### (2) Usage examples of allocated accounting data

### ①Drill-down Search

Drill-down Search will be explained as an after-allocation usage example.

Drill-down Search means here a search processing from summary data of before-/after-allocation to more detailed data.

For example, when an operator doubts whether achieved labor cost in April has something abnormal in Cellular phone business in Fig.13, the operator operates PC 20, reads out the memory contents of After-allocation Monthly Summary Storage Unit 153c and designates the achieved labor cost in April in Cellular phone business as an object of Drill-down Search.

In response, Accounting Server 10 reads out the accounting data allocated for the achieved labor cost in April in Cellular phone business from Before-allocation Accounting Details Storage Unit 151a or After-allocation Accounting Details Storage Unit 151c. Then Accounting Server 10 has the data displayed on PC 20.

The administrator can refer to the accounting data and find out the above causes.

### ②Allocation Adjustment

Next, Allocation Adjustment Processing will be explained as an after-allocation usage example.

An allocation pattern can be re-examined any time. Therefore a cost can be re-allocated on the basis of the re-examined allocation pattern. Namely, the allocation will be carried out on the basis of a changed pattern, if the allocation pattern stored in Allocation Table 15b is changed to cope with actual conditions. Namely, an adjustment on each piece of accounting data can be implemented, since transaction ID and transaction Date & Time are granted to each transaction.

Shown in the above embodiment, each allocation processing or each allocation adjustment can be implemented easily since transaction ID is granted to each transaction.

### C: Modified example

As mentioned above, the present invention is not limited to the above embodiment and various changes are possible as described below.

For example, in the above embodiment, Accounting Server 10 is in charge of calculation & storage functions for accounting data, while PC 20 in charge of input & output functions for the accounting data. This embodiment is suitable to a usage in a network such as LAN. However, embodiments are not limited to this type. For example, all the functions can be mounted on a single personal computer, or all the functions can be more dispersed.

## Claims

1. A cost allocation method comprising:
an allocating step for allocation of a cost generated relating to plural business areas, said allocating step including steps of choosing an allocation pattern among plural allocation patterns on the basis of a predetermined allocation standard for said cost, and of allocating said cost to each business area on the basis of the chosen allocation pattern; and
an adding up step of adding up the allocated cost amount in each business area.

2. The cost allocation method according to Claim 1,
further comprising a storage step for writing said allocation patterns into a storage device beforehand,
wherein said allocation step includes reading out said allocation pattern corresponding to said allocation standard among said allocation patterns stored in said storage unit, and includes allocating said cost amount to each business area on the basis of said allocation pattern.

3. The cost allocation system according to Claim 1 further comprising:
a storage step of granting an inherent cost ID to said generated cost, and of storing cost information relating to said cost in a database with a relation to said cost ID; and
an output step of reading out and outputting said cost information, designated by a user among totalized results in said adding up step, from said database on the basis of said cost ID for said cost.

4. The cost allocation method according to Claim 1,
wherein said plural allocation patterns include a pattern determined by an allocation standard to allocate a generated cost on the basis of which organization generated said cost.

5. The cost allocation method according to Claim 1,
wherein said plural allocation patterns include a pattern determined by an allocation standard to allocate a generated cost on the basis of which function of each organization generated said cost.

6. The cost allocation method according to Claim 1,
wherein said plural allocation patterns include a pattern determined by an allocation standard to allocate a generated cost on the basis of which accounting item generated said cost.

7. The cost allocation method according to Claim 1,
wherein said plural allocation patterns include a pattern determined by an allocation standard to allocate a generated cost on the basis of which project generated said cost among plural projects, which are carried out by one or more organizations to achieve a predetermined purpose.

8. The cost allocation method according to Claim 1, further comprising:
a step for urging a user to input an allocation pattern; and
a step for accepting said allocation pattern input by said user, and
wherein said allocation step allocates said cost amount on the basis of said input allocation pattern to each of said business areas.

9. The cost allocation method according to Claim 1,
wherein said adding up step includes adding up said allocated cost amount in each business area along with adding up in each accounting item of said business area.

10. An accounting server comprising:
a storage device for storing plural allocation patterns;
an allocation element for allocation of a cost generated relating to plural business areas, said allocating element choosing an allocation pattern among said plural allocation patterns stored in said storage device on the basis of a predetermined allocation standard for said cost, and allocating said cost to each business area on the basis of said chosen allocation pattern; and
an adding up element for adding up the allocated cost amount in each business area.

11. A computer program product for causing a computer to execute:
an allocation step for allocation of a cost generated relating to plural business areas, said allocation step including steps of choosing an allocation pattern among plural allocation patterns stored in a storage device on the basis of a predetermined allocation standard for said cost, and of allocating said cost to each business area on the basis of said chosen allocation pattern; and
an adding up step of adding up the allocated cost amount in each business area.

12. A computer-readable storage medium storing a computer program product for causing a computer to execute:
an allocation step for allocation of a cost generated relating to plural business areas, said allocation step including steps of choosing an allocation pattern among plural allocation patterns stored in a storage device on the basis of a predetermined allocation standard for said cost, and of allocating said cost to each business area on the basis of the chosen allocation pattern; and
an adding up step of adding up the allocated cost amount in each business area.
